# EUROPEAN PATENT APPLICATION

(11) **EP 1 101 973 A1**
(43) Date of publication of application: **23.05.2001**
(21) Application number: 00307495.2
(22) Date of filing: 31.08.2000
(51) Int. Cl.: F16G 13/06

(54) **A chain**

(30) Priority: 19.11.1999 GB 9927258
(71) Applicant: RENOLD Plc, Wythenshawe Manchester M22 5WL (GB)
(72) Inventor: Hilton, Kevin Huw, Newbrough, Hexam NE47 5AN (GB)
(74) Representative: Every, David Aidan

(57) **Abstract**

A chain for transmission or transportation purposed comprises inner links (1) interconnected by opposed outer links (2). Each outer link (2) has an integral boss (7) that is rotatably received in a bore (6) of the inner link (1). The bore (6) receives two bosses (7), one from each opposed outer link plate (2). A pin (3) is engaged in the two bosses (7) so as to hold the outer link plates (2) together in assembly with the inner links (1) and to strengthen the chain. The arrangement provides for a chain that is relatively low cost to manufacture and assemble.

## Description

The present invention relates to a transmission or transportation chain.

A conventional roller and bush chain assembly for transmission or transportation purposes has pairs of opposed inner link plates that are interconnected by pairs of opposed outer link plates and pins about which the inner link plates articulate. Each pin is fixed at its ends to a respective outer link plate but is pivotal relative to the inner link plates within a bush that extends between opposed apertures in the inner link plates.

There is a consistent requirement in the chain manufacturing industry to produce chains of this kind at low cost and with low maintenance or repair requirements. This has resulted in a move towards the manufacture of at least some chain components from plastics or polymer-based materials that have better wear-resistant properties.

It is an object of the present invention to provide for a chain that can be produced and assembled at relatively low cost whilst still retaining adequate chain performance.

According to the present invention there is provided a chain comprising a plurality of inner links interconnected by opposed outer links, each inner link having at least one first bore in which is rotatably received a boss of each opposed outer link, the bosses in the first bore defining a second bore, and a pin that is received in the second bore in a fixed engagement so as to interconnect the outer links. Preferably the pin is a friction fit in the second bore. The pin may be splined to ensure secure engagement and is preferably helically splined.

The boss of each outer link plate preferably extends across part of the width of the inner link and abuts with the boss of an opposed outer link plate.

The inner link may comprise inner link plates interconnected by cylindrical portions, each link having two first bores passing through the inner link plates and a respective cylindrical bore.

A specific embodiment of the present invention will now be described, by way of example only, with reference to the accompanying drawings in which:

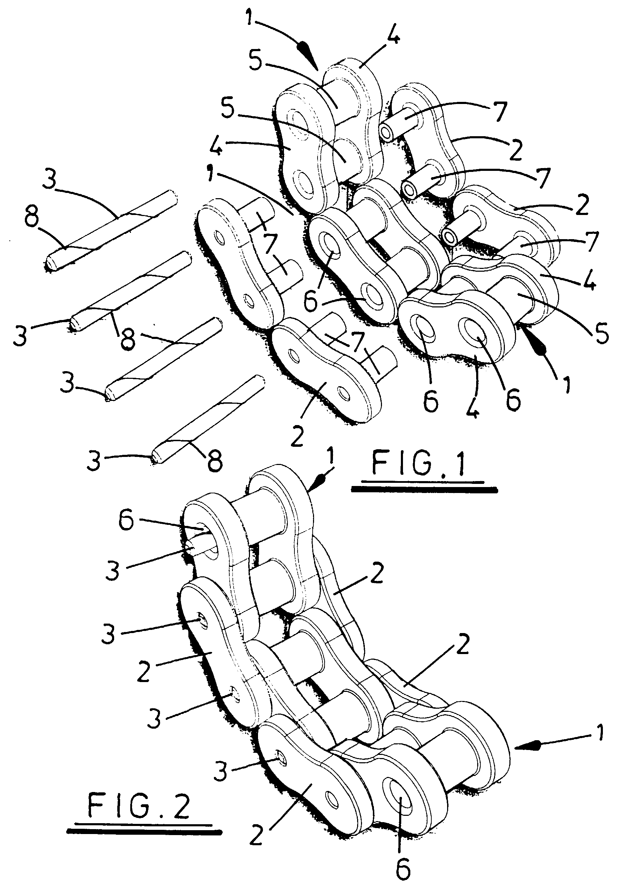

Figure 1 is an exploded perspective view of a chain according to the present invention; and
Figure 2 is a perspective view of the chain of figure 1 shown assembled.

Referring now to the drawings, the exemplary chain assembly comprises a plurality of identical inner links 1 (only three shown) each of which is integrally moulded from a polymer material such as nylon, although other materials could be used. The inner links 1 arc interconnected by a combination of opposed outer link plates 2 and pins 3 in such a way (described in detail later) that the inner links 1 are able to articulate relative to one another.

Each inner link 1 comprises two opposed, spaced and parallel inner link plates 4 that are interconnected by two integral, spaced, parallel, transverse cylindrical portions 5. Two bores 6 extend through each inner link plate 1 and coaxially through each cylindrical portion 5. Each outer link plate 2 is moulded from a polymer material such as nylon and has two integral bosses 7 that are designed to be rotatably received in respective neighbouring bores 6 of adjacent inner links 1. Each inner link bore 6 receives, concentrically, two bosses 7, one from each outer link plate 2 on each side, the two bosses 7 in combination extending across the full width of the bore 6.

The opposed outer link plates 2 are held together with the opposed bosses 7 in abutment by a metal pin 3 that is disposed coaxially inside the two bosses 7 in a friction fit (e.g. an interference fit). In the embodiment shown in the appended figures the pin 3 is helically splined (as indicated by reference numeral 8) for secure engagement with the inner surface of the bosses 7.

Since the bosses 7 extend across the full width of the inner link 1 the chain has improved wear resistance characteristics.

The metal pin 3 provides not only added strength to the chain assembly but also ensures that the outer link plates 2 are securely held to the inner links 1.

The design allows for the outer link plate 2 to be of any suitable design without interfering with the connection of the inner and outer links. For example, it may have an integrally moulded attachment link for a conveyor if the chain is to be used for transportation purposes.

In an alternative embodiment, not shown in the drawings, each outer link is moulded around one of the pins such that it is retained in one of the bosses, the other boss of the link remaining free to receive the pin held by the opposed outer link in a friction fit. Of course this arrangement may be varied by one of the opposed outer links being moulded around both pins and the other having bosses designed to receive the free ends of the pins.

It will be appreciated that numerous modifications to the above-described design may be made without departing from the scope of the invention as defined in the appended claims. For example, the pin may be secured to the outer link bosses in any appropriate manner such as a friction of any kind or gluing etc.

## Claims

1. A chain comprising a plurality of inner links interconnected by opposed outer links, each inner link having at least one first bore in which is rotatably received a boss of each opposed outer link, the bosses in the first bore defining a second bore, and a pin that is received in the second bore in a fixed engagement so as to interconnect the outer links.

2. A chain according to claim 1, wherein the pin is a friction fit at least part of the second bore.

3. A chain according to claim 2, wherein the pin is splined.

4. A chain according to claim 3, wherein the pin is helically splined.

5. A chain according to any preceding claim, wherein one end of the pin is fixedly retained in one of the bosses.

6. A chain according to claim 5, wherein one of the outer links is moulded around said pin.

7. A chain according to any one of claims 1 to 4, wherein the first bore is concentric with the second bore.

8. A chain according to any preceding claim, wherein each boss is integral with a respective outer link.

9. A chain according to any preceding clam, the boss of each outer link plate extends across part of the width of the inner link and abuts with the boss of an opposed outer link plate.

10. A chain according to any preceding claim, wherein the inner link comprises inner link plates interconnected by cylindrical portions, the inner link having two first bores passing through the inner link plates and a respective cylindrical bore.

11. A chain according to any preceding claim wherein the inner link and outer link plates are made from a polymer material and the pin is metallic.

12. A chain substantially as hereinbefore described with reference to the accompanying drawings.
